# EUROPÄISCHE PATENTANMELDUNG

(11) **EP 4 266 270 A1**
(43) Veröffentlichungstag der Anmeldung: **25.10.2023**
(21) Anmeldenummer: 23165790.9
(22) Anmeldetag: 31.03.2023
(51) Int. Cl.: G07C 9/15, G07C 9/10, G07C 9/20, G07C 9/37

(54) **VERFAHREN ZUR STEUERUNG EINER TÜRANLAGE**

(30) Priorität: 18.04.2022 EP 22168693
(71) Anmelder: dormakaba Deutschland GmbH, 58256 Ennepetal (DE)
(72) Erfinder: Meiering, Dennis, 58256 Ennepetal (DE); Busch, Sven, 58256 Ennepetal (DE); Winkelmann, Patrick, 58256 Ennepetal (DE); Ooi, Boon Ping, 58256 Ennepetal (DE)
(74) Vertreter: Balder IP Law, S.L.

(57) **Zusammenfassung**

Gegenstand der Erfindung ist ein Verfahren zur Steuerung wenigstens einer Türanlage (100) zur Trennung einer Eingangsseite (I) vor der Türanlage (100) von einer Ausgangsseite (II) hinter der Türanlage (100), wobei die Türanlage (100) wenigstens einen Türantrieb (10) zur Bewegung zumindest eines Flügelelementes (11) zwischen einer Öffnungsstellung und einer Schließstellung aufweist, und wobei die Türanlage (100) mit einer Sensoreinheit (12) zur Erfassung wenigstens einer Person (13) innerhalb eines Sensorerfassungsbereiches (14) eingerichtet ist, und ferner ist wenigstens auf der Eingangsseite (I) vor der Türanlage (100) eine Authentifizierungseinrichtung (15) zur Authentifizierung von Personen (13) vorgesehen. Das Verfahren bedient sich erfindungsgemäß wenigstens der folgenden Schritte: Erteilen einer Zugangsberechtigung an die Person (13) mittels der Authentifizierungseinrichtung (15), Erfassen der Position der authentifizierten Person (13) mittels der Sensoreinheit (12) im Sensorerfassungsbereich (14), kontinuierliches Verfolgen der Person (13) im Sensorerfassungsbereich (14) mittels der Sensoreinheit (12) und Aktivieren einer Öffnung des Flügelelementes (11) der Türanlage (100) mittels des Türantriebs (10) bei einer Annäherung der authentifizierten Person (13) an das wenigstens eine Flügelelement (11). Die Erfindung betrifft weiterhin eine Türanlage (100) mit einer Regeleinheit (16) zur Ausführung eines Verfahrens.

## Beschreibung

Die vorliegende Erfindung betrifft ein Verfahren zur Steuerung wenigstens einer Türanlage zur Trennung einer Eingangsseite vor der Türanlage von einer Ausgangsseite hinter der Türanlage, wobei die Türanlage wenigstens einen Türantrieb zur Bewegung zumindest eines Flügelelementes zwischen einer Öffnungsstellung und einer Schließstellung aufweist, und wobei die Türanlage mit einer Sensoreinheit zur Erfassung wenigstens einer Person innerhalb eines Sensorerfassungsbereiches eingerichtet ist, und ferner ist auf der Eingangsseite vor der Türanlage eine Authentifizierungseinrichtung zur Authentifizierung von Personen vorgesehen. Die Erfindung betrifft weiterhin eine Türanlage mit einer Regeleinheit zur Ausführung des Verfahrens.

### STAND DER TECHNIK

Für die Steuerung von automatischen Türanlagen, insbesondere Schiebetüranlagen, sind Türantriebe bekannt, die mit Sensoreinheiten verbunden sind, die zur Erkennung von Personen ausgebildet sind. Derartige Türanlagen werden durch Steuerungseinheiten gesteuert, die die Sensordaten der Sensoreinheiten aufnehmen und entsprechende Steuerimpulse an den Türantrieb ausgeben.

So zeigt beispielsweise die DE 203 20 497 U1 eine Türanlage mit einem Türantrieb und mit einer Sensoreinheit, wobei die Sensoreinheit als Präsenzsensor dient und mit der die Gegenwart von Personen in einer Erfassungszone erkannt werden kann. Bei Erkennung der Person wird über den Türantrieb das Öffnen des Türflügels der Türanlage ausgelöst. Dabei ist angegeben, dass als Sensoreinheit Radarsensoren zum Einsatz kommen können. Nachteilhafterweise wird jedoch in der Regel nur ein einfacher Öffnungsimpuls durch die Steuereinheit erzeugt, sobald die Sensoreinheit die Präsenz einer Person erfasst und die Erfassung als entsprechende Sensordaten an die Steuereinheit übermittelt. Dabei kann eine Flügelbewegung zwar ausgelöst werden, diese setzt aber häufig zu früh oder zu spät ein oder ist in sonstiger Weise unpassend, beispielsweise, wenn die Öffnungsbewegung des Türflügels zu langsam abläuft oder die Öffnungshaltedauer zu kurz oder zu lange andauert.

Ein Optimum in der Steuerung von Türanlagen liegt insbesondere darin, für Personen das Passieren der Türanlage möglichst so zu gestalten, dass die Bewegung des wenigstens einen Flügelelements die Gangbewegung der Person nicht beeinflusst. Auf der anderen Seite sollte jedoch die Öffnungsdauer des Türflügels nicht zu lange andauern, um beispielsweise bei niedrigen Außentemperaturen den Wärmeverlust in Innenräumen zu minimieren. Insofern sollte das Flügelelement nicht länger als notwendig aus der Schließposition geführt werden, um Energieverluste zu vermeiden.

Moderne Türanlagen können zudem Zutrittskontrollsysteme aufweisen, die nur authentifizierte Personen die Tür passieren lassen. Nachteilhafterweise führt die nicht immer zuverlässige Funktion von Sensoren der Sensoreinheiten zu Fehlfunktionen oder es authentifiziert sich eine erste Person, woraufhin eine zweite Person unbemerkt die Türanlage passieren kann, was es zu vermeiden gilt.

Beispielsweise offenbart die EP 3 188 134 B1 ein Verfahren zur Kontrolle von Zugangsberechtigungen durch ein Zugangskontrollsystem zum Beispiel an einem Skilift oder in sensiblen Bereichen eines Unternehmens, wobei auf Datenträgern oder mobilen elektronischen Geräten wie Handys abgelegte Zugangsberechtigungen berührungslos erfasst und ausgelesen werden, wobei auf der Eingangsseite des Zugangskontrollsystems mehrere Leseeinrichtungen vorgesehen sind, welche den gesamten Eingangsbereich abdecken, wobei auf der Eingangsseite des Zugangskontrollsystems mehrere mit dem Server verbundene Kameras vorgesehen sind, welche den gesamten Eingangsbereich abdecken, wobei im Rahmen des Verfahrens mittels der Erfassung der Datenträger oder der mobilen elektronischen Geräte, auf denen eine gültige Zugangsberechtigung abgelegt ist, durch zumindest drei Leseeinrichtungen durch Trilateration bzw. Multilateration die aktuelle Position des mobilen elektronischen Gerätes ermittelt wird, und wobei mittels eines zweiten, bildgebenden Verfahrens, welches parallel zum ersten Verfahren durchgeführt wird, mittels der Kameras die aktuelle Position sämtlicher im Eingangsbereich des Zugangskontrollsystems anwesenden Personen erfasst wird. Die Kamera kann dabei allgemein als eine Sensoreinheit betrachtet werden, mit der Personen in einem Sensorerfassungsbereich erkannt und verfolgt werden.

### OFFENBARUNG DER ERFINDUNG

Die Aufgabe der Erfindung ist die weitere Verbesserung eines Verfahrens zum Betrieb einer Türanlage, mit dem weitreichendere Möglichkeiten der Authentifizierung von Personen auch für Türanlagen geschaffen werden können. Zudem soll die Türanlage einen hohen Begehungskomfort für authentifizierte Personen bieten können, wobei die Flügelelemente der Türanlage gleichwohl nicht länge in der Öffnungsstellung verbleiben sollten als notwendig. Weiterhin sollte die Türanlage auch mit den Möglichkeiten der Personen - Authentifizierung mit nur einer möglichst minimalen Anzahl von Sensoreinheiten vollumfänglich betrieben werden können.

Diese Aufgabe wird ausgehend von einem Verfahren gemäß dem Oberbegriff des Anspruches 1 und gemäß einer Türanlage gemäß Anspruch 12 mit den jeweils kennzeichnenden Merkmalen gelöst. Vorteilhafte Weiterbildungen der Erfindung sind in den jeweils abhängigen Ansprüchen angegeben.

Das erfindungsgemäße Verfahren zur Steuerung einer Türanlage sieht wenigstens die folgenden Schritte vor: Erteilen einer Zugangsberechtigung an die Person mittels der Authentifizierungseinrichtung, Erfassen der Position der authentifizierten Person mittels der Sensoreinheit im Sensorerfassungsbereich, kontinuierliches Verfolgen der Person im Sensorerfassungsbereich mittels der Sensoreinheit und Aktivieren einer Öffnung des Flügelelementes der Türanlage mittels des Türantriebs bei einer Annäherung der authentifizierten Person an das wenigstens eine Flügelelement.

Der Begriff authentifiziert wird im Folgenden synonym mit dem Begriff zugangsberechtigt verwendet.

Kerngedanke der Erfindung ist die Nutzung von Sensoreinheiten einer Türanlage, die sowohl auf der Eingangsseite als auch auf der Ausgangsseite der Türanlage einen Sensorerfassungsbereich aufspannen, und Personen, die in den Sensorerfassungsbereich eintreten, werden von der Sensoreinheit erfasst und es können die Flügelelemente auf gewohnte Weise von einer Schließstellung in eine Öffnungsstellung überführt werden. Gemäß der Erfindung sollten diese an sich bekannten Sensoreinheiten zudem dazu genutzt werden, eine oder mehrere Personen im Sensorerfassungsbereich in ihrer fortlaufenden Bewegung zu überwachen, beispielsweise wenn sich diese nach der Authentifizierung von der Authentifizierungseinrichtung noch eine Weile im Sensorerfassungsbereich auf der Eingangsseite der Türanlage befinden, wobei die Verfolgung der Person auch schon vor der Authentifizierung mittels der Authentifizierungseinrichtung erfolgen kann. Die Sensoreinheiten können dabei so ausgeführt sein, dass eine Person innerhalb des Sensorerfassungsbereiches regelrecht verfolgt werden kann, auch unter Anwesenheit weiterer, insbesondere nicht authentifizierter Personen. So wird die Möglichkeit geschaffen, dass auch noch eine Zeit vergehen kann zwischen dem Moment der Authentifizierung der Person an der Authentifizierungseinrichtung und der tatsächlichen Begehung der Türanlage, etwa wenn sich die Person unmittelbar den Flügelelementen nähert und der Begehungswunsch von derselben Sensoreinheit erkannt wird.

Zwar ist das Verfahren auf die Zugangsberechtigung von Personen ausgerichtet, diese stehen vorliegend stellvertretend jedoch auch für Objekte, beispielsweise bewegliche Gegenstände, Roboter und dergleichen. Selbstverständlich können auch nicht authentifizierte Personen mittlels der Sensoreinheit verfolgt, was insbesondere in einem geringen Abstand von der authentifizierten Person vorteilhaft ist, sodass die Türanlage gerade dann nicht öffnet, wenn sich die nicht authentifizierte Person in einem Umkreis von bis zu 3m oder von 2m oder von 1m oder 50cm zur authentifizierten Person aufhält. Insofern können mehrere oder vorzugsweise alle Personen mittels der Sensoreinheit elektronisch mit verfolgt werden, die sich im Erfassungsbereich aufhalten.

Vorliegend wird zum verbesserten Verständnis und zur leichteren Beschreibung das Verfahren in Zusammenhang mit Personen dargestellt, wobei anstelle der Person oder der Personen allgemein auch ein Objekt oder Objekte die Türanlage passieren können bzw. von den Sensoreinheiten erfasst werden können. Diese Objekte können insbesondere von Personen mitgeführte allgemeine Gegenstände oder beispielsweise selbstfahrende Transportsysteme oder Roboter sein.

Insbesondere wird das erfindungsgemäße Verfahren zur Steuerung der Türanlage mit einer Regeleinheit ermöglicht, die als Bestandteil der Türanlage eingerichtet ist und die die Position des Flügelelementes basierend auf den Sensordaten der Sensoreinheit in Abhängigkeit der Bewegung und/oder der Kontur der Person kontinuierlich und dynamisch fortlaufend regelt. Die Regeleinheit ermöglicht dabei sowohl die Verfolgung der authentifizierten Person innerhalb des Sensorerfassungsbereiches als auch die unmittelbare Auslösung einer Reaktion des wenigstens einen Flügelelementes bei der Annäherung der Person. Die Position des zumindest einen Flügelelementes wird mittels der Regeleinheit vorzugsweise mittelbar über zumindest einen Türantrieb geregelt.

Dabei ermöglicht die Regeleinheit die Schaffung eines geschlossenen Regelkreises aus der Regeleinheit, der Sensoreinheit zur Erfassung der Person und dem Türantrieb zum Antrieb des Flügelelementes. Dieser geschlossene Regelkreis ermöglichst es, dass das Flügelelement auf die Bewegung und die Kontur der Person unmittelbar folgt, und nähert sich die Person beispielsweise der Türanlage an und wird durch die Authentifizierung der Person das Flügelelement in die Öffnungsbewegung überführt, so kann bei einer Unterbrechung der Bewegung der Person oder bei einer Umkehr und einer Vergrößerung des Abstandes der Person zur Türanlage das Flügelelement auch unmittelbar folgend wieder eine Schließbewegung ausführen.

Die Bewegung des Flügelelementes kann insofern abhängig von der Bewegung der Person unmittelbar folgend gesteuert werden. Die Kontur der Person beschreibt beispielsweise die Bewegung der Person, etwa wenn die Person einen Arm oder ein Bein ausstreckt, sodass das Flügelelement durch die Erfassung der Änderung der Kontur der Person durch die Sensoreinheit ebenfalls reagieren kann. Erst durch eine solche Regeleinheit besteht die Möglichkeit, nicht nur einen einfachen Öffnungsimpuls zur Öffnung eines Flügelelementes auszulösen, wenn sich eine authentifizierte Person beispielsweise so der Türanlage nähert und wenn der Begehungswunsch erkannt wird, sondern das Flügelelement schließt auch unmittelbar wieder, wenn die Person die Türanlage beispielsweise doch nicht begeht, und sich wieder entfernt. Damit wird effektiv vermieden, dass beispielsweise eine nicht authentifizierte Person die Türanlage passieren kann.

In einer bevorzugten Ausführungsform kann durch die Türanlage ein Zugang zu einem sonst abgesperrten Areal, insbesondere einem Raum oder einem Flughafenbereich, ermöglicht werden. Ferner kann mittels der Türanlage oder einer weiteren Türanlage der Ausgang aus diesem abgesperrten Areal selektierend ermöglicht werden. Insbesondere kann dabei ein Schritt erfolgen, ein Erteilen einer Ausgangsberechtigung an die Person mittels der Erkennungseinrichtung oder einer weiteren Erkennungseinrichtung umfasst. Vorzugsweise wird die Person mittels der Sensoreinheit oder einer weiteren Sensoreinheit in dem abgesperrten Areal kontinuierlich verfolgt. Insbesondere kann die Ausgangsberechtigung dabei davon abhängen, ob die verfolgte Person in eine bestimmte Zone des abgesperrten Areals, insbesondere allein, betreten hat. Alternativ oder kumulativ kann die Ausgangsberechtigung davon abhängen, ob eine weitere erfolgreiche Authentifizierung, insbesondere mittels einer weiteren Authentifizierungseinrichtung, stattgefunden hat.

Es ist denkbar, dass zumindest die eine Türanlage als verschwenkbare und/oder drehbare oder verschiebbare Türvorrichtung ausgebildet ist, insbesondere als:
- eine Drehtür,
- eine Karusselltür,
- eine Sicherheitskarusselltür,
- eine Schiebetür,
- eine Faltschiebetür,
- eine Drehsperre,
- ein Drehkreuz,
- eine Schwenktür.

Vorzugsweise ist denkbar, dass mittels der Regeleinheit oder einer weiteren Regeleinheit die ausgangsberechtigte Person von einer nicht ausgangsberechtigten Person differenziert wird, indem die ausgangsberechtigte Person nach der Erteilung der Ausgangsberechtigung mit einem weiteren elektronischen Tag versehen wird, der der Person elektronisch angeheftet wird. Das Differenzieren der Personen kann erfolgen, da das kontinuierliche Verfolgen der Person im Sensorerfassungsbereich mittels der Sensoreinheit stattfindet. So kann dieser Tag zusammen mit der Person verfolgt werden.

Aufgrund des kontinuierlichen Verfolgens der Person mittels der Sensoreinheit und/oder einer weiteren Sensoreinheit, kann insbesondere mittels der Regeleinheit oder der weiteren Regeleinheit ein Aktivieren einer Öffnung der Türanlage oder der weiteren Türanlage bei einer Annäherung der ausgangsberechtigten Person an die Türanlage und/oder an die weitere Türanlage durchgeführt werden. Somit kann die zu einem abgesperrten Bereich zugangsberechtigte Person sicher zunächst in den abgesperrten Bereich gelangen. Ferner kann genau diese Person in dem abgesperrten Bereich, insbesondere auf bestimmte Handlungen, geprüft werden, sodass dieser Person eine Ausgangsberechtigung erteilt werden kann. Wenn diese Person ausgangsberechtigt ist, kann dieser Person der Ausgang aus dem abgesperrten Bereich ermöglicht werden. Dieser Prozess wird insbesondere aufgrund des kontinuierlichen Verfolgens der Person mittels der Sensoreinheit und/oder einer weiteren Sensoreinheit ermöglicht. Insbesondere kann dabei dieser Prozess ohne Sicherheitspersonal erfolgen. Dabei kann bei Verstößen gegen die Berechtigungen ein Signal ausgegeben werden. Auf diese Weise kann das Sicherheitspersonal informiert werden.

Insbesondere wird mit der Regeleinheit die authentifizierte Person von der nicht authentifizierten Person differenziert, indem die authentifizierte Person nach der Authentifizierung mit einem elektronischen Tag versehen wird, der der Person elektronisch in der Regeleinheit regelrecht angeheftet wird. Bevorzugt ist in Verbindung mit der wenigstens einen Sensoreinheit zumindest eine Bildauswerteeinheit eingerichtet, wobei mittels der Bildauswerteeinheit die kontinuierliche Verfolgung der Bewegung der Person über deren gesamte Erfassungsdauer und/oder den gesamten Erfassungsbereich wenigstens unterstützend ausgeführt und der Regeleinheit bereitgestellt wird.

Wie nachfolgend bei den Ausführungsbeispielen beschrieben wird, kann es sich bei dem elektronischen Tag um eine Art des elektronischen Tags handeln. Der Tag kann somit visuell oder virtuell sein, wobei er dazu geeignet ist, die authentifizierte Person von einer nicht authentifizierten Person mittels der Sensoreinheit und/oder der Bildauswerteeinheit und/oder der Regeleinheit zu unterscheiden. Der Tag ist insofern elektronisch, als dass er auf einem elektronischen Gerät, insbesondere der Sensoreinheit und/oder der Bildauswerteeinheit und/oder der Regeleinheit, erzeugt wird.

Mittels der Bildauswerteeinheit können entsprechende Attribute der Person erfasst werden, wobei die authentifizierte Person beispielsweise dadurch erkannt wird, dass im Zeitpunkt der Authentifizierung die entsprechende Person in unmittelbarer Nähe beispielsweise direkt vor der Authentifizierungseinrichtung gestanden hat, und entsprechend mit dem elektronischen Tag versehen werden kann. Bewegt sich die authentifizierte Person von der Authentifizierungseinrichtung innerhalb des Sensorerfassungsbereiches weg, so kann der elektronische Tag der Person weiterhin anhaften, wodurch die Authentifizierung erhalten bleibt. So kann die Person auch noch zu einem späteren Zeitpunkt die Türanlage tatsächlich passieren, und die Regeleinheit löst das Öffnen der Flügelelemente aus.

Dabei kann es mit der Bildauswerteeinheit zudem zu einer Erkennung spezifischer Attribute der Person kommen, beispielsweise der Größe oder der sonstigen Kontur. Sofern die Bildauswerteeinheit die Person von anderen Personen unterscheiden kann, beispielsweise basierend auf der Größe, der Farbe, den Farben oder der Kontur, kann neben der kontinuierlichen Verfolgung der Bewegung der Person diese auch noch mit weiteren Merkmalen identifiziert werden, wodurch die Zuverlässigkeit erhöht wird, dass die Türanlage auch tatsächlich nur authentifizierte Personen passieren lässt. Insbesondere kann dabei eine Konturenerkennung mit Hilfe künstlicher Intelligenz durchgeführt werden. Eine derartige Konturenerkennung mit Hilfe künstlicher Intelligenz kann zur erneuten Authentifizierung und/oder zur kontinuierlichen Verfolgung der Bewegung der Person genutzt werden.

Wie nachfolgend beschrieben wird, kann zu diesem Zweck alternativ oder kumulativ eine, insbesondere anonymisierte, Gesichtserkennung und/oder eine Mustererkennung, insbesondere mit Hilfe künstlicher Intelligenz, dienen.

Wie zuvor beschrieben wurde, kann zur erneuten Authentifizierung und/oder zur kontinuierlichen Verfolgung der Bewegung der Person eine Erkennung spezifischer Attribute der Person erfolgen, beispielsweise der Größe oder der sonstigen Kontur, insbesondere mit Hilfe künstlicher Intelligenz. Sofern die Person von anderen Personen unterschieden werden kann, beispielsweise basierend auf der Größe, der Farben oder der Kontur, kann neben der kontinuierlichen Verfolgung der Bewegung der Person und/oder für die kontinuierliche Verfolgung der Bewegung der Person die Person auch noch anhand weiterer Merkmale, insbesondere mittels der Bildauswerteeinheit, identifiziert werden, insbesondere,
- ob bestimmte Körperteile einer Person erkannt werden und/oder
- ob bestimmte Kleidungsstücke erkannt werden und/oder
- ob eine bestimmte Bewegungsform erkannt wird.

Dies kann ebenfalls mit Hilfe künstlicher Intelligenz erfolgen. Wie nachfolgend beschrieben, kann dies mit Hilfe von einem künstliche Intelligenz-System, bevorzugt als Teil der Regeleinehit, erfolgen. Es ist denkbar, dass das künstliche Intelligenz-System ein Machine-Learning-System, ein Deep-Learning-System, ein neuronales Netz, eine Konturenerkennung und/oder eine Mustererkennung aufweist und/oder durchführt. Somit kann mit einfach und günstig ausgebildeter Sensoreinheit ein Maximum an Information über den Erfassungsbereich geliefert werden. Dabei können die zuvor beschriebenen Attribute und/oder Merkmale als Teil einer Mustererkennung verstanden werden.

Zur erneuten Authentifizierung der Person im Falle eines Verlassens des Erfassungsbereiches durch die Person, bevor die Türanlage passiert wurde, und/oder im Falle des Betretens von einer, der Türanlage nachgelagerten oder eine parallel begehbar eingerichteten weiteren, Türanlage durch die Person können die beschriebenen Attribute und/oder Merkmale in der Regeleinheit, insbesondere eine vorbestimmte Zeit lang, gespeichert werden. Damit können dann die gespeicherten Attribute und/oder Merkmale als ein neues Authentifizierungskriterium mittels der Regeleinheit und/oder mittels einer gemeinsamen Regeleinheit und/oder mittels einer zentralen Regeleinheit und/oder mittels einer weiteren Regeleinheit von einer weiteren Türanlage verwendet werden. Dadurch kann die originäre Authentifizierung, welche in meisten Fällen mit mehr Aufwand verbunden sein wird, durch das neue Authentifizierungskriterium ersetzt werden.

Die beschriebenen Attribute und/oder Merkmale können auch zur kontinuierlichen Verfolgung der Bewegung der Person genutzt werden, wenn mittels mehrerer Sensoreinheiten ein gemeinsamer Erfassungsbereich aufgespannt wird. Die beschriebenen Attribute und/oder Merkmale können dann zur Übergabe der Person von dem Bereich der einen Sensoreinheit in den Bereich einer weiteren Sensoreinheit verwendet werden, sodass die Person kontinuierlich und somit unterbrechungsfrei verfolgt werden kann.

Alternativ oder kumulativ zu einer Authentifizierungseinrichtung in Gestalt eines sogenannten Access-Points kann die Person ein elektronisches Kommunikationsmittel mitführen, wobei die Türanlage und/oder die Sensoreinheit eine Erkennungseinrichtung als Authentifizierungseinrichtung aufweisen kann. Dann, wenn die Person in den Sensorerfassungsbereich eintritt, kann das elektronische Kommunikationsmittel in räumlicher Verbindung mit der tragenden Person von der Erkennungseinrichtung erfasst werden, und wobei daraufhin der tragende Person der elektronische Tag angeheftet werden kann. Voraussetzung dafür ist, dass das elektronische Kommunikationsmittel im Besitz der Person bleibt, beispielsweise ein Handy.

Eine weitere Erhöhung der Sicherheit gegen ein unberechtigtes Betreten eines Raumes wird beispielsweise dadurch erreicht, dass dann, wenn die authentifizierte Person sich dem wenigstens einen Flügelelement nähert, die Regeleinheit das wenigstens eine Flügelelement auch nur so weit und/oder so lange öffnet, dass auch nur die authentifizierte Person die Türanlage passieren kann.

Mit weiterem Vorteil sieht das Verfahren vor, dass auf der Eingangsseite und auf der Ausgangsseite der Türanlage jeweils eine Sensoreinheit eingerichtet wird und/oder wobei die Sensorerfassungsbereiche beider Sensoreinheiten sich überschneiden, aneinander angrenzen oder zumindest einen Abstand zueinander aufweisen, der kleiner ist als die Abmessung einer insbesondere kleinen Person, sodass die Erfassung des zumindest einen Objekts von einem ersten Sensorerfassungsbereich an den einen zweiten Sensorerfassungsbereich übergehend und insbesondere unterbrechungsfrei, ausgeführt wird.

Bevorzugt weit die Türanlage zwei Flügelelemente auf, wobei die Bewegungen der Flügelelemente mittels der Regeleinheit unabhängig voneinander kontinuierlich und dynamisch fortlaufend wenigstens mittelbar über die Türantriebe geregelt werden.

Insbesondere ist die Türanlage als Schiebetüranlage ausgeführt und weist zwei in einer gemeinsamen Bewegungsebene geführte Flügelelemente auf, wobei die Bewegungen der Flügelelemente mittels der Regeleinheit unabhängig voneinander kontinuierlich und dynamisch fortlaufend geregelt werden. Die Regelung erfolgt in der Weise, dass die Bewegung der Flügelelemente eine unmittelbare Reaktion auf die Bewegung oder eine Änderung der Kontur einer Person darstellt, die einen Begehungswunsch erkennen lässt. Nähert sich die Person beispielsweise den Flügelelementen der Türanlage, so öffnen diese insbesondere an der Position, an der sich die Person befindet, sodass ein Begehungsschlauch für die Person durch die Türanlage hindurch geschaffen wird. Bewegt sich die Person beispielsweise zur Seite, so bewegt sich ein Flügelelement weiter in die Öffnungsposition, während sich das weitere Flügelelement beispielsweise wieder weiter in die Schließposition bewegt. Folglich können die Flügelelemente der Position und der Bewegung sowie der Kontur der Person so angepasst werden, dass die Reaktion in der Bewegung der Flügelelemente auf die Position, die Bewegungsrichtung und die Bewegungsgeschwindigkeit der Person ebenso wie die Kontur der Person reagiert. Erst mit dieser Regelungstechnik und mit dem Aufbau eines aktiven Regelkreises kann auch das vorliegende Prinzip der Authentifizierung und der Weiterverfolgung der authentifizierten Person erfolgen, während die authentifizierte Person von Personen unterschieden werden kann, die keine Authentifizierung besitzen.

Das Verfahren ermöglicht vorzugsweise weiterhin, mit der wenigstens einen Sensoreinheit und mit dem zugehörigen Sensorerfassungsbereich eine Schließkantenabsicherung des wenigstens einen Flügelelementes der Türanlage zu schaffen. Die Schließkantenabsicherung beruht auf der Auswertung von Sensordaten der Sensoreinheit, insbesondere über die Regeleinheit. Dabei kann auf weitere Sensoren zur Schließkantenabscherung verzichtet werden.

Die Regeleinheit bezeichnet im vorliegenden Sinn und/oder abstrahiert auch eine einfacher aufgebaute Steuereinheit, die beispielsweise so programmiert sein kann, dass das wenigstens eine Flügelelement eine Bewegung, insbesondere in die Schließstellung, unterbricht, sobald es zu einer Kollision mit einer Person oder einem Objekt kommen kann. Befindet sich auf der Eingangsseite sowie auf der Ausgangsseite der Türanlage jeweils eine Sensoreinheit, so können sich die Sensorerfassungsbereiche beider Sensoreinheiten überschneiden, sodass eine nahtlose Überwachung der Schließkanten der Flügelelemente ermöglicht wird. Sofern sich die Sensorerfassungsbereiche beider Sensoreinheiten überschneiden, kann sogar eine redundante Absicherung der Schließkanten umgesetzt werden.

Es müssen sich dabei die Sensorerfassungsbereiche nicht zwingend überlappen und diese müssen auch nicht ungefähr aneinander angrenzen, da eine Person generell eine räumliche Ausdehnung hat. Der Abstand der Sensorerfassungsbereiche beider Sensoreinheiten auf den sich gegenüberliegenden Türseiten sollte insofern zumindest so klein sein, dass vermieden wird, dass eine kleine Person, etwa ein Kind, nicht zwischen den Sensorerfassungsbereichen unerkannt bleiben kann. Ist zwischen den Sensorerfassungsbereichen auf den sich gegenüberliegenden Türseiten eine Erfassungslücke vorhanden, so kann diese durch Interpolation gefüllt werden, sodass praktisch keine Regelunterbrechung erfolgen muss.

Gemäß einer weiteren vorteilhaften Ausgestaltung kann die Türanlage und/oder zumindest die Sensoreinheit wenigstens eine Bildkamera aufweisen, mit der das Gesicht der Person insbesondere in Wirkverbindung mit der Regeleinheit erkannt werden kann. Das Verfahren kann damit so weitergebildet werden, dass die Erkennung und Identifizierung der Person zur Bestimmung einer Authentifizierung bzw. Zugangsberechtigung der Türanlage mit berücksichtigt wird.

Beispielsweise kann in einem Datenspeicher, der lokal oder in einer Cloud vorgehalten werden kann, eine Zugangsberechtigung mit dem Gesicht der berechtigten Person abgelegt sein. Wird über die Authentifizierungseinrichtung entweder in Form eines Access-Points oder über die Erkennung des elektronischen Kommunikationsmittels über die Erkennungseinrichtung der Begehungswunsch der authentifizierten Person erkannt, so kann mit der Bildkamera die Person zusätzlich dadurch erkannt werden, dass das Gesicht bei Begehung der Türanlage mit abgeprüft wird. Nur dann, wenn das Gesicht, das aktuell von der die Türanlage begehenden Person erfasst wird, mit dem Gesicht übereinstimmt, das der Berechtigung der betreffenden Person hinterlegt ist, so öffnet die Türanlage. Stimmt das Gesicht, das über die Bildkamera erfasst wird, nicht mit der der Authentifizierung hinterlegten Person überein, so öffnet die Türanlage nicht. Alternativ zum Gesicht können auch andere Attribute und/oder Merkmale der Person erkannt werden, beispielsweise Größe, Kontur, Bewegungsform und dergleichen.

Das Verfahren kann auch zur Steuerung mehrerer Türanlagen Anwendung finden, wobei die mehreren Türanlagen beispielsweise parallel zueinander angeordnet sind, und eine gemeinsame Eingangsseite und eine gemeinsame Ausgangsseite aufweisen. Die mehreren Türanlagen können mittels einer gemeinsamen Regeleinheit gesteuert werden oder es ist vorgesehen, dass die mehreren Türanlagen jeweilige Regeleinheiten aufweisen, zwischen denen Daten ausgetauscht werden, wobei bei einer Authentifizierung einer Person mittels der zumindest einen Authentifizierungseinrichtung und/oder der zumindest einen Erkennungseinrichtung an einer ersten Türanlage die Person auch eine parallel eingerichtete zweite Türanlage passieren kann.

Beispielsweise an Flughäfen sind Türanlagen aus mehreren einzelnen Türanlagen bekannt. Authentifiziert sich eine Person beispielsweise an einem Access-Point oder mittels eines elektronischen Kommunikationsmittels bei einer ersten Türanlage, kann diese Person auch eine parallel angeordnete weitere Türanlage passieren. Derartige Systeme sind dann vorteilhaft, wenn mehrere Personen an den Türanlagen beispielsweise anstehen, etwa wenn die Türanlagen zur Personenvereinzelung dienen, wie dies an Flughäfen bekannt ist. Dabei kommt es vor, dass Personen sich an einer ersten entsprechenden Einrichtung authentifizieren, die einer ersten Türanlage zugeordnet ist, die Person jedoch eine parallel angeordnete weitere Türanlage passieren will. Durch eine zentrale Regeleinheit oder durch eine elektronische Datenverbindung zwischen den jeweiligen Regeleinheiten der Türanlagen kann eine einmal authentifizierte Person auch eine andere Türanlage passieren, an der sich die Person nicht authentifiziert hat.

Alternativ kann jedoch vorgesehen sein, dass die authentifizierte Person nur die Türanlage passieren darf, deren Authentifizierungseinrichtung genutzt wurde. Insbesondere in diesem Fall kann die zentrale Regeleinheit ein Signal aktivieren, welches ein Betreten der aktivierten richtigen Türanlage fordert.

Möglich wird dies insbesondere durch die kontinuierliche Verfolgung der Person mittels der Sensoreinheit, solange sich die Person innerhalb des Sensorerfassungsbereiches aufhält. Die Sensorerfassungsbereiche der Sensoreinheiten der einzelnen Türanlagen überschneiden sich dabei vorzugsweise, sodass eine Person auch von Türanlage zu Türanlage kontinuierlich verfolgt werden kann. Einer Person, die dabei einen elektronischen Tag aufweist, der die Authentifizierung zum Passieren der Türanlage bildet, kann dieser Tag angehaftet bleiben, auch wenn sich die Person in einer Weise vor den mehreren Türanlagen bewegt, sodass die Person die einzelnen Sensorerfassungsbereiche der Sensoreinheiten der zugeordneten Türanlagen verlässt und einen nächsten Sensorbereich betritt.

In einer bevorzugten Ausführungsform kann durch die Türanlage ein Zugang zu einem sonst abgesperrten Areal, insbesondere einem Raum oder einem Flughafenbereich, ermöglicht werden. Ferner kann mittels der Türanlage oder einer weiteren Türanlage der Ausgang aus diesem abgesperrten Areal ermöglicht werden. Insbesondere kann dabei ein Schritt erfolgen, welcher umfasst:
- ein Erteilen einer Ausgangsberechtigung an die Person mittels der Authentifizierungseinrichtung und/oder Erkennungseinrichtung oder einer weiteren Authentifizierungseinrichtung und/oder einer weiteren Erkennungseinrichtung.

Vorzugsweise wird die Person mittels der Sensoreinheit oder einer weiteren Sensoreinheit in dem abgesperrten Areal kontinuierlich verfolgt. Insbesondere kann die Ausgangsberechtigung dabei davon abhängen, ob die verfolgte Person eine bestimmte Zone des abgesperrten Areals, insbesondere alleine, betreten hat. Alternativ oder kumulativ kann die Ausgangsberechtigung davon abhängen, ob eine weitere erfolgreiche Authentifizierung, insbesondere mittels einer weiteren Authentifizierungseinrichtung, stattgefunden hat. Dies kann derart erfolgen, dass mittels der Regeleinheit oder einer weiteren Regeleinheit die ausgangsberechtigte Person von einer nicht ausgangsberechtigten Person differenziert wird, indem die ausgangsberechtigte Person nach der Erteilung der Ausgangsberechtigung mit einem weiteren elektronischen Tag versehen wird, der der Person elektronisch angeheftet wird. Aufgrund des kontinuierlichen Verfolgens der Person mittels der Sensoreinheit und/oder einer weiteren Sensoreinheit, kann, insbesondere mittels der Regeleinheit oder der weiteren Regeleinheit, ein Aktivieren einer Öffnung der Türanlage oder der weiteren Türanlage bei einer Annäherung der ausgangsberechtigten Person an die Türanlage und/oder an die weitere Türanlage durchgeführt werden. Somit kann die zu einem abgesperrten Bereich zugangsberechtigte Person sicher zunächst in den abgesperrten Bereich gelangen. Ferner kann diese Person in dem abgesperrten Bereich, insbesondere auf bestimmte Handlungen, geprüft werden, sodass dieser Person eine Ausgangsberechtigung erteilt werden kann. Wenn diese Person ausgangsberechtigt ist, kann dieser Person der Ausgang aus dem abgesperrten Bereich ermöglicht werden. Dieser Prozess wird insbesondere aufgrund des kontinuierlichen Verfolgens der Person mittels der Sensoreinheit und/oder einer weiteren Sensoreinheit ermöglicht. Insbesondere kann dabei dieser Prozess ohne Sicherheitspersonal erfolgen. Dabei kann bei Verstößen gegen die Berechtigungen ein Signal ausgegeben werden. Auf diese Weise kann das Sicherheitspersonal informiert werden.

Die Erfindung richtet sich ferner auf eine Türanlage mit einer Regeleinheit zur Ausführung des vorstehend beschriebenen Verfahrens. Die Regeleinheit ist dabei vorzugsweise in Verbindung mit wenigstens einer Sensoreinheit so ausgebildet, dass eine authentifizierte Person von einer nicht authentifizierten Person unterschieden werden kann, indem die Regeleinheit und/oder die Sensoreinheit eine einmal authentifizierte Person innerhalb des Sensorerfassungsbereiches verfolgt.

Insbesondere weist die Türanlage und/oder insbesondere die Regeleinheit ein Ton-, Licht- und/oder Sprachausgabemittel auf, um der Person ein Signal zu geben oder eine Sprachmitteilung zu machen. Beispielsweise kann die Person bei einer positiven Authentifizierung ein entsprechendes Signal erhalten. Darauf folgend kann die Regeleinheit insbesondere eine Meldung an ein übergeordnetes System liefern.

Bevorzugt weist die Sensoreinheit wenigstens eine und bevorzugt zwei Kameras auf, und insbesondere weist die Sensoreinheit wenigstens eine Lichtquelle auf, mit der ein Lichtraster in den Sensorerfassungsbereich projizierbar ist. Damit ist eine Bildverarbeitung mittels einer Bildauswerteeinheit ermöglicht, die Bestandteil der Sensoreinheit oder Bestandteil der Regeleinheit sein kann, oder die Bildauswerteeinheit bildet eine eigene bauliche Einheit.

Zudem kann die Sensoreinheit eine Bildkamera zur Gesichtserkennung der Person aufweisen, insbesondere kann die Gesichtserkennung dabei in Verbindung mit der Regeleinheit und/oder in Verbindung mit der Bildauswerteeinheit und/oder künstlicher Intellegenz erfolgen.

Bevorzugt weist die Sensoreinheit wenigstens eine, insbesondere eine einzige Kamera, bevorzugt zwei Kameras auf und/oder die Sensoreinheit weist wenigstens eine Lichtquelle auf, mit der ein Lichtraster in den Sensorerfassungsbereich projizierbar ist und/oder die Sensoreinheit weist einen LIDAR-Sensor auf.

Bevorzugt weist die Sensoreinheit wenigstens eine und bevorzugt zwei Kameras auf und/oder die Sensoreinheit weist wenigstens eine Lichtquelle auf, mit der ein Lichtraster in den Sensorerfassungsbereich projizierbar ist und/oder die Sensoreinheit weist einen LIDAR-Sensor auf.

Insofern sind im Rahmen der Erfindung mehrere bildverarbeitende oder zumindest optisch funktionierende Sensorprinzipien denkbar, umfassend Stereokameras, LIDAR-Sensoren und/oder dergleichen. Somit sind im Rahmen der Erfindung auch Abstandsmesssensoren denkbar, die für mehrere Punkte im Erfassungsbereich Abstände liefern.

Bevorzugt oder ausschließlich kommen Sensoreinheiten zum Einsatz, die geeignet sind, Abstände zwischen dem Sensor und Oberflächen zu messen, wobei die Oberflächen von den zu erfassenden Objekten und/oder von Gegenständen der Umgebung wie Boden, Tür, Rahmen und Wände gebildet werden. Derartige Sensoreinheiten ermitteln den Abstand zwischen Sensor und Oberfläche entweder durch das Triangulationsverfahren und/oder durch Messung der Laufzeit einer Strahlung aus einer zum Sensoreinheit gehörenden Sendequelle.

Bei der Anwendung des Triangulationsverfahren werden die unterschiedlichen Richtungswinkel zu einem definierten Oberflächenpunkt von mindestens zwei beabstandeten Referenzpunkten, die aus zwei oder mehr wellen-empfindlichen Sensoren, z.B. Liniensensoren oder Einzel-Punkt-Sensoren oder Kameras. Vorzugsweise handelt es sich dabei um eine Stereo-Kamera. Alternativ kommt beim Triangulationsverfahren ein wellen-empfindlicher Sensor, insbesondere eine Kamera, und eine punktförmigen Referenzlichtquelle, z.B. Punktraster-Lichtquelle zum Einsatz.

Bevorzugte Kombinationen beim Triangulationsverfahren sind:
1. Mithilfe von Fremdlicht, z.B. Sonne oder Raumbeleuchtung und zwei oder mehr wellen-empfindlichen Sensoren erfolgt die Winkel- und/oder Abstandsberechnung
2. Mithilfe von systemeigenen Lichtquellen, vorzugweise Punktförmig z.B. Punkteraster, und zumindest einem wellen-empfindlichen Sensor erfolgt die Winkel- und/oder Abstandsberechnung
3. Kombination aus 1 und 2, wodurch erreicht wird, dass das Sensorsystem geeignet ist sowohl bei Dunkelheit und/oder schwachem Licht als auch bei sehr starkem Fremdlicht zumindest die Abstandsberechnung durchzuführen.

Bei der Anwendung der Messung der Laufzeit eine Strahlung kommt eine oder mehrere zur Sensoreinheit gehörende Sendequellen zum Einsatz, welche die Strahlung in Form von elektromagnetischen Wellen, insbesondere Licht, Radar, Funk, Röntgen, Mikrowellen und/oder, und/oder Schall-Wellen erzeugen, aussenden und auf die zu erfassenden Oberflächen der Objekte werfen. Ein Empfangssystem der Sensoreinheit, das für die jeweilige Strahlungsart sensitiv ist, fängt die von den Oberflächen reflektierten Strahlen auf. Zusammen mit einer Berechnungseinheit der Steuerungseinheit oder der Sensoreinheit wird direkt in Form von Zeitmessung und/oder indirekt, insbesondere in Form von Messung von Interferenzen, Phasenverschiebungen Und/oder Frequenzverschiebungen, insbesondere in Relation zu der ausgesendeten Strahlung die Laufzeit bestimmt, die die Strahlung vom Zeitpunkt der Aussendung bis zum Empfang im Empfangssystem benötigt. Die eine oder mehrere Sendequelle/n können diffuse, also gestreute Strahlung, insbesondere in Verbindung mit TOF-Kamera, FMCW-Radar (FMCW= Frequency-Modulated Continuous Wave Radar Systeme) aussenden und/oder auf einen oder mehrere Punkte fokussierte Strahlung, insbesondere in Verbindung mit LiDAR (LIDAR steht für Light Detection and Ranging), Laser-Array und/oder Laser-Scanner, aussenden. Weiterhin können die unterschiedlichen Bereiche einer Sensorerfassungsbereiches gleichzeitig und/oder sequenziell, also zeitlich nacheinander folgend, mit der Strahlung ausgeleuchtet werden bzw. Kombinationen.

Insbesondere kann ein Verfahren angewandt werden, welches sowohl das Triangulationsverfahren und die Messung der Laufzeit einer Strahlung aus einer zum Sensoreinheit gehörenden Sendequelle kombiniert.

Als Ergebnis des Verfahrens kann ein Abstandsbild bereitgestellt werden, welches den insbesondere kompletten Sensorerfassungsbereich aus mehreren einzelnen Abstandsmessungspunkten umfasst.

Besonders bevorzugt kommt dabei ein LIDAR-Sensor in Verbindung mit einem Verfahren basierend auf der Abstandsmessung zum Einsatz. Diese Kombination, insbesondere wie auch die weiteren genannten, stellt eine besonders effiziente Möglichkeit, insbesondere hinsichtlich Sicherheit und/oder Komplexität, dar.

Alternativ oder kumulativ kann die Sensoreinheit als wellen-empfindlicher Sensor, insbesondere beliebige Kamera, ausgebildet sein, deren Daten von künstlicher Intelligenz, insbesondere einem künstliche Intelligenz-System (KI-System), bevorzugt als Teil der Regeleinehit, analysiert werden. Es ist denkbar, dass das künstliche Intelligenz-System ein Machine-Learning-System, ein Deep-Learning-System, ein neuronales Netz, eine Konturenerkennung und/oder eine Musterkennung aufweist und/oder durchführt. Somit kann mit einfach und günstig ausgebildeter Sensoreinheit ein Maximum an Information über den Erfassungsbereich geliefert werden.

In einer Ausführungsform umfasst das KI-System ein zugrunde liegendes maschinelles Lernmodell. Geeignete maschinelle Lernmodelle basieren auf einem Faltungsneuronalen Netz (CNN) oder einem rekurrenten Neuronalen Netz (RNN) oder einer Kombination davon. CNNs und RNNs sind beides Arten von Deep-Learning-Algorithmen, die häufig in Anwendungen des maschinellen Lernens eingesetzt werden. Ein CNN ist eine Art von neuronalem Netzwerk, das sich besonders gut für Bild- und Videoerkennungsaufgaben eignet.

Im Allgemeinen verwendet ein CNN Faltungsschichten, um Merkmale aus Eingabedaten zu extrahieren, gefolgt von Pooling-Schichten, um die Dimensionalität der Merkmalskarten zu reduzieren. Die Ausgabe der Faltungsschichten und der Pooling-Schichten wird dann abgeflacht und in eine oder mehrere vollständig verbundene Schichten eingespeist, die für die endgültige Klassifizierungsentscheidung verantwortlich sind. Der Hauptvorteil von CNNs besteht darin, dass sie automatisch hierarchische Darstellungen von Eingabedaten erlernen können, was sie sehr effektiv bei der Erkennung komplexer Muster in Bildern und Videos macht.

Ein RNN hingegen ist eine Art von neuronalem Netzwerk, das sich besonders gut für Sequenzdaten eignet, wie etwa Zeitreihen oder natürliche Sprache. Ein RNN verwendet rekurrente Verbindungen, um Informationen von einem Zeitschritt zum nächsten weiterzugeben. Dadurch kann das Netz einen internen Zustand oder ein Gedächtnis für frühere Eingaben beibehalten, was für Aufgaben wie Spracherkennung oder Sprachübersetzung nützlich ist. Der Hauptvorteil von RNNs ist ihre Fähigkeit, zeitliche Abhängigkeiten in den Eingabedaten zu erfassen, was sie sehr effektiv bei der Modellierung von sequentiellen Daten macht.

Ein wesentlicher Unterschied zwischen CNNs und RNNs besteht darin, dass CNNs für die Verarbeitung von Eingabedaten fester Größe (z. B. Bilder mit fester Auflösung) konzipiert sind, während RNNs Eingabedaten variabler Länge (z. B. Sequenzen unterschiedlicher Länge) verarbeiten können. Ein weiterer Unterschied besteht darin, dass CNNs besser für Aufgaben geeignet sind, die räumliche Informationen beinhalten (z. B. Bildklassifizierung), während RNNs besser für Aufgaben geeignet sind, die zeitliche Informationen beinhalten (z. B. Spracherkennung).

In einer Ausführungsform der vorliegenden Erfindung kann eine Kombination aus CNNs und RNNs vorgesehen werden, da für Aufgaben der Videoerkennung sowohl räumliche als auch zeitliche Informationen wichtig sind. Ein CNN kann verwendet werden, um räumliche Merkmale aus jedem Bild des Videos zu extrahieren, die dann in ein RNN eingespeist werden, um die zeitlichen Abhängigkeiten zwischen Bildern zu modellieren.

Das maschinelle Lernmodell kann anhand eines großen Datensatzes mit gekennzeichneten Beispielen trainiert werden, wobei jedes Beispiel aus einer Zeitreihe von Datenpunkten und einer entsprechenden Kennzeichnung besteht, die den Typ von dem Attribut, Merkmal, Kontur und/oder Muster angibt. Die Trainingsdaten werden verwendet, um die Gewichte und Verzerrungen des Modells so anzupassen, dass es neue, ungesehene Beispiele genau klassifizieren kann. Der Trainingsprozess umfasst in der Regel einen iterativen Ansatz, wobei dem Modell eine Reihe von Trainingsbeispielen vorgelegt wird und die Gewichte und Verzerrungen so angepasst werden, dass die Differenz zwischen der vorhergesagten Ausgabe und dem tatsächlichen Label minimiert wird. Dieser Prozess wird über viele Epochen hinweg wiederholt, bis das Modell gelernt hat, das Attribut, Merkmal, Kontur und/oder Muster in den Trainingsdaten genau zu klassifizieren.

Die Art der künstlichen Intelligenz, die in diesem Zusammenhang verwendet werden kann, ist in der Regel das überwachte Lernen, bei dem das Modell anhand eines markierten Datensatzes trainiert wird. Unüberwachte Lernansätze wie Clustering und Anomalie-erkennung können jedoch auch im Rahmen der vorliegenden Erfindung verwendet werden, beispielsweise um die oben erwähnte Datenbank zu füllen.

Bestimmte Ausführungsformen der Erfindung können auf der Verwendung eines maschinellen Lernmodells oder eines maschinellen Lernalgorithmus beruhen. Maschinelles Lernen kann sich auf Algorithmen und statistische Modelle beziehen, die Computersysteme verwenden können, um eine bestimmte Aufgabe ohne explizite Anweisungen auszuführen und sich stattdessen auf Modelle und Schlussfolgerungen zu stützen. Beispielsweise kann beim maschinellen Lernen anstelle einer regelbasierten Umwandlung von Daten eine Umwandlung von Daten verwendet werden, die aus einer Analyse von historischen und/oder Trainingsdaten abgeleitet wird. So kann beispielsweise der Inhalt von Bildern mit Hilfe eines maschinellen Lernmodells oder eines maschinellen Lernalgorithmus analysiert werden. Damit das maschinelle Lernmodell den Inhalt eines Bildes analysieren kann, kann das maschinelle Lernmodell mit Trainingsbildern als Eingabe und Trainingsinhaltsinformationen als Ausgabe trainiert werden. Durch das Trainieren des maschinellen Lernmodells mit einer großen Anzahl von Trainingsbildern und/oder Trainingssequenzen (z. B. Wörter oder Sätze) und zugehörigen Trainingsinhaltsinformationen (z. B. Beschriftungen oder Anmerkungen) "lernt" das maschinelle Lernmodell, den Inhalt der Bilder zu erkennen, so dass der Inhalt von Bildern, die nicht in den Trainingsdaten enthalten sind, mithilfe des maschinellen Lernmodells erkannt werden kann. Das gleiche Prinzip kann auch für andere Arten von Sensordaten verwendet werden: Durch das Trainieren eines maschinellen Lernmodells mit Trainings-Sensordaten und einer gewünschten Ausgabe "lernt" das maschinelle Lernmodell eine Transformation zwischen den Sensordaten und der Ausgabe, die verwendet werden kann, um eine Ausgabe auf der Grundlage von Nicht-Trainings-Sensordaten zu liefern, die dem maschinellen Lernmodell bereitgestellt werden. Die bereitgestellten Daten (z. B. Sensordaten, Metadaten und/oder Bilddaten) können vorverarbeitet werden, um einen Merkmalsvektor zu erhalten, der als Eingabe für das maschinelle Lernmodell verwendet wird.

Modelle des maschinellen Lernens können mit Hilfe von Trainingsdaten trainiert werden. In den oben genannten Beispielen wird eine Trainingsmethode verwendet, die als "überwachtes Lernen" bezeichnet wird. Beim überwachten Lernen wird das maschinelle Lernmodell unter Verwendung einer Vielzahl von Trainingsproben trainiert, wobei jede Probe eine Vielzahl von Eingabedatenwerten und eine Vielzahl von gewünschten Ausgabewerten umfassen kann, d. h. jede Trainingsprobe ist mit einem gewünschten Ausgabewert verbunden. Durch die Angabe sowohl von Trainingsmustern als auch von gewünschten Ausgabewerten "lernt" das maschinelle Lernmodell, welchen Ausgabewert es auf der Grundlage eines Eingangsmusters liefern soll, das den während des Trainings gelieferten Mustern ähnlich ist. Neben dem überwachten Lernen kann auch das halbüberwachte Lernen verwendet werden. Beim halb-überwachten Lernen fehlt einigen der Trainingsmuster ein entsprechender gewünschter Ausgabewert. Überwachtes Lernen kann auf einem überwachten Lernalgorithmus beruhen (z. B. einem Klassifizierungsalgorithmus, einem Regressionsalgorithmus oder einem Ähnlichkeitslernalgorithmus). Klassifizierungsalgorithmen können verwendet werden, wenn die Ausgabewerte auf eine begrenzte Menge von Werten (kategorische Variablen) beschränkt sind, d. h. die Eingabe wird einem der begrenzten Menge von Werten zugeordnet. Regressionsalgorithmen können verwendet werden, wenn die Ausgaben einen beliebigen numerischen Wert (innerhalb eines Bereichs) haben können. Ähnlichkeitslernalgorithmen können sowohl Klassifizierungs- als auch Regressionsalgorithmen ähneln, basieren jedoch auf dem Lernen aus Beispielen unter Verwendung einer Ähnlichkeitsfunktion, die misst, wie ähnlich oder verwandt zwei Objekte sind. Neben dem überwachten oder halbüberwachten Lernen kann auch das unüberwachte Lernen zum Trainieren des maschinellen Lernmodells verwendet werden. Beim unüberwachten Lernen können (nur) Eingabedaten geliefert werden, und ein unüberwachter Lernalgorithmus kann verwendet werden, um eine Struktur in den Eingabedaten zu finden (z. B. durch Gruppierung oder Clustering der Eingabedaten, Auffinden von Gemeinsamkeiten in den Daten). Clustering ist die Zuordnung von Eingabedaten, die eine Vielzahl von Eingabewerten umfassen, zu Teilmengen (Clustern), so dass Eingabewerte innerhalb desselben Clusters nach einem oder mehreren (vordefinierten) Ähnlichkeitskriterien ähnlich sind, während sie sich von Eingabewerten unterscheiden, die in anderen Clustern enthalten sind. Verstärkungslernen ist eine dritte Gruppe von Algorithmen des maschinellen Lernens, die zum Trainieren des maschinellen Lernmodells verwendet werden können. Beim Verstärkungslernen werden ein oder mehrere Software-Akteure (sogenannte "Software-Agenten") darauf trainiert, in einer Umgebung Aktionen auszuführen. Auf der Grundlage der durchgeführten Aktionen wird eine Belohnung berechnet. Beim Verstärkungslernen werden ein oder mehrere Software-Agenten darauf trainiert, die Aktionen so zu wählen, dass die kumulative Belohnung erhöht wird, was dazu führt, dass die Software-Agenten die ihnen gestellte Aufgabe immer besser bewältigen (was sich in steigenden Belohnungen niederschlägt).

Darüber hinaus können einige Techniken auf einige der Algorithmen des maschinellen Lernens angewendet werden. So kann zum Beispiel Merkmalslernen eingesetzt werden. Mit anderen Worten, das maschinelle Lernmodell kann zumindest teilweise mit Hilfe von Merkmalslernen trainiert werden und/oder der maschinelle Lernalgorithmus kann eine Merkmalslernkomponente enthalten. Die Algorithmen des Merkmalslernens, die auch als Algorithmen des Repräsentationslernens bezeichnet werden können, können die Informationen in ihren Eingaben bewahren, sie aber auch so umwandeln, dass sie nützlich werden, oft als Vorverarbeitungsschritt vor der Durchführung von Klassifizierungen oder Vorhersagen. Das Lernen von Merkmalen kann z. B. auf der Hauptkomponentenanalyse oder der Clusteranalyse basieren.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Ansicht einer Türanlage zur Ausführung des erfindungsgemäßen Verfahrens,
- Fig. 2a-2c: die Türanlage gemäß Figur 1 mit mehreren Personen, wobei die Personen sich in ihrer Authentifizierung voneinander unterscheiden, und wobei die Authentifizierung mittels eines Access-Points erfolgt,
- Fig. 3a-3c: ein weiteres Ausführungsbeispiel gemäß Figur 2c, wobei jedoch die Authentifizierung über eine Erkennungseinrichtung in Verbindung mit einem elektronischen Kommunikationsmittel erfolgt und
- Fig. 4a, 4b: eine Türanlage mit mehreren einzelnen Türanlagen, die parallel zueinander eingerichtet sind, und die von mehreren Personen begangen werden können.

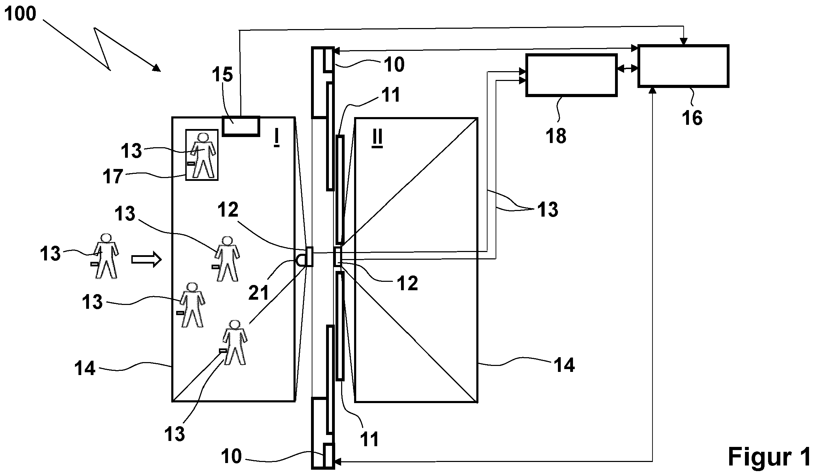

Figur 1 zeigt eine Türanlage 100 in einer schematischen Draufsicht, wobei die Türanlage 100 beispielhaft von mehreren Personen 13 begangen wird. Die Türanlage 100 trennt eine Eingangsseite I von einer Ausgangsseite II, wobei sich die dargestellten Personen 13 auf der Eingangsseite I der Türanlage 100 befinden.

Die Türanlage 100 weist auf der Eingangsseite I eine erste Sensoreinheit 12 auf, und auf der Ausgangsseite II ist eine weitere Sensoreinheit 12 vorgesehen. Die Sensoreinheiten 12 spannen auf den jeweiligen Seiten I und II Sensorerfassungsbereiche 14 auf, innerhalb der die Personen 13 mit den Sensoreinheiten 12 erfasst werden können.

Die Türanlage 100 ist beispielhaft als Schiebetüranlage 100 ausgeführt und besitzt zwei Flügelelemente 11, die in einer gemeinsamen Bewegungsebene zwischen einer Schließstellung und einer Öffnungsstellung verfahren können. Zum Antrieb der Flügelelemente 11 sind jeweilige Türantriebe 10 vorgesehen, die jeweils angesteuert werden von einer Regeleinheit 16. Die Regeleinheit 16 ist über eine Bildauswerteeinheit 18 mit den Sensoreinheiten 12 verbunden.

Die oberseitige Person 13 hat sich beispielhaft an der Authentifizierungseinrichtung 15 auf der Eingangsseite I authentifiziert, und erhält damit eine Art elektronischen Tag 17, beispielhaft dargestellt mit einem Rahmen um die authentifizierte Person 13. Die weiteren dargestellten Personen 13 besitzen einen solchen elektronischen Tag 17 nicht.

Das erfindungsgemäße Verfahren führt nunmehr die folgenden Schritte aus: Erteilung einer ersten Zugangsberechtigung an die Person 13 mittels der Authentifizierungseinrichtung 15, wie dargestellt mit dem erteilten elektronischen Tag 17 an die neben der Authentifizierungseinrichtung 15 dargestellten Person 13. Es erfolgt eine anschließende Erfassung von spezifischen Daten betreffend die Person 13 nach der Authentifizierung. Diese spezifischen Daten sind beispielsweise die genaue Position der Person 13 innerhalb des Sensorerfassungsbereiches 14 und/oder die Bewegungsgeschwindigkeit und/oder die Bewegungsrichtung und/oder die Kontur der Person 13. Die spezifischen Daten können aber auch Daten der Person 13 sein, beispielsweise das Aussehen, besondere optische Merkmale oder beispielsweise ein Bewegungsmuster. Eine solche Erkennung kann zudem unterstützt werden durch die Bildkamera 21, mit der weitere, insbesondere optische spezifische Daten aufgenommen werden können.

Bewegt sich die Person 13 mit dem dargestellten elektronischen Tag 17 von der Position neben der Authentifizierungseinrichtung 15 weg, so erfolgt die Überwachung der Bewegung der Person 13 innerhalb des Sensorerfassungsbereiches mittels der Sensoreinheit 12 auf der Eingangsseite I. Zeigt die Person 13 mit dem elektronischen Tag 17 einen Begehungswunsch, insbesondere indem sich die Person 13 den Flügelelementen 11 der Schiebetüranlage nähert, so wird eine Öffnung der Flügelelemente 11 der Türanlage 100 aktiviert, indem mit der Regeleinheit 16 die Türantriebe 10 angesteuert werden. Anschließend erfolgt mit der Sensoreinheit 12 eine zusätzliche Identifikation der Person 13, und die Öffnung der Türanlage 100 erfolgt nur in Verbindung mit der positiven Identifikation der Person 13 mittels der Sensoreinheit 12. Somit wird vermieden, dass sich beispielsweise eine erste Person 13 an der Authentifizierungseinrichtung 15 authentifiziert und den elektronischen Tag 17 erlangt, während eine weitere Person 13 die Türanlage 100 passieren kann, indem die weitere Person 13 in den Sensorerfassungsbereich 14 der Sensoreinheit 12 hineinläuft und einen Begehungswunsch der Türanlage 100 äußert, indem die Person sich den Flügelelementen 11 nähert. Durch die Mitwirkung der Sensoreinheit 12 und die damit verbundene Überwachung der Bewegung und fortlaufende Identifikation der authentifizierten Person 13 kann die Türanlage 100 authentifizierte Personen 13 von nicht authentifizierten Personen 13 unterscheiden. Möglich ist dieses Prinzip auch mit mehreren authentifizierten Personen 13 gleichzeitig.

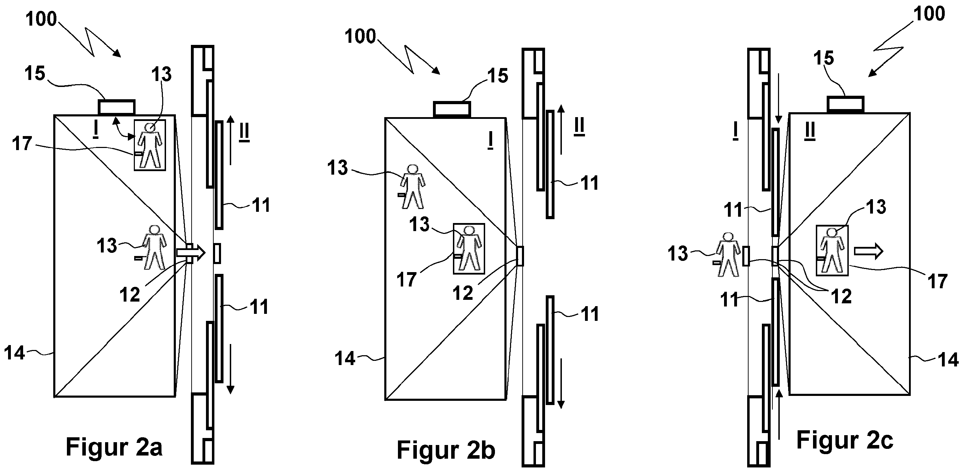

Die Figuren 2a, 2b und 2c zeigen beispielhaft die Abfolge des Verfahrens zur Steuerung der Türanlage 100, wobei sich gemäß Figur 2a zunächst eine Person 13 an einer Authentifizierungseinrichtung 15 authentifiziert, wobei zugleich eine zweite Person 13 unmittelbar vor den Flügelelementen 11 der Türanlage 100 steht. Authentifiziert sich die Person 13, dargestellt mit einem Rahmen, der den elektrischen Tag 17 wiedergibt, so bleibt die Tür gemäß Figur 2a dennoch geschlossen, auch wenn die Sensoreinheit 12 die Person 13 ohne den elektronischen Tag 17 innerhalb des Sensorerfassungsbereiches 14 vor den Türflügeln 11 erkennt.

In Figur 2b bewegt sich die Person 13 mit dem elektronischen Tag unmittelbar vor die Flügelelemente 11, sodass diese öffnen, da die Person 13 mit dem elektronischen Tag 17 für die Türanlage 100 begehungsberechtigt ist. Dabei hat die Sensoreinheit 12 die Bewegung der Person 13 von der Position gemäß Figur 2a in die Position gemäß Figur 2b innerhalb des Sensorerfassungsbereiches 14 verfolgt.

Figur 2c zeigt die Türanlage 100 wieder mit geschlossenen Flügelelementen 11, nachdem die Person 13 die Türanlage 100 passiert hat. Die weitere dargestellte Person 13 ohne den elektronischen Tag 17 darf die Türanlage 100 nicht passieren, sodass trotz der Erkennung der Person 13 durch die Sensoreinheit 12 auf der Eingangsseite I die Flügelelemente 11 geschlossen bleiben.

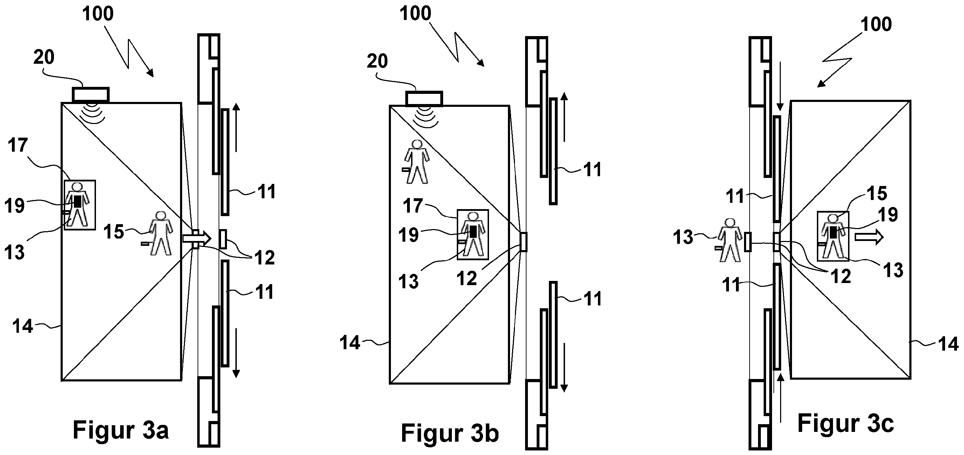

Die Figuren 3a und 3b zeigen eine weitere Abfolge des Verfahrens zur Steuerung der Türanlage 100, wobei eine Person 13 mit einem elektronischen Kommunikationsmittel 19 gezeigt ist, und das Kommunikationsmittel 19 wird durch eine Erkennungseinrichtung 20 auf der Eingangsseite I der Türanlage 100 erkannt. Erfolgt die Erkennung des Kommunikationsmittels 19 über die Erkennungseinrichtung 20 insbesondere berührungslos, so erlangt die Person 13 den elektronischen Tag 17, um die Türanlage 100 passieren zu dürfen. Die Erkennungseinrichtung 20 bildet dabei eine weitere Form einer Authentifizierungseinrichtung 15, die jedoch nicht als Access-Point ausgebildet ist, sondern die Erkennung des Kommunikationsmittels 19, also beispielsweise ein Handy einer Person, erfolgt berührungslos.

Erfolgt die Erkennung des Kommunikationsmittels 19, so kann die Sensoreinheit 12 die Position der Person 13 innerhalb des Sensorerfassungsbereiches 14 als entsprechendes Attribut erfassen, sodass bei einer späteren Bewegung der Person 13, beispielsweise zwischen der Position der Figur 3a zur Position der Figur 3b, verfolgt wird. So kann erkannt werden, dass gemäß Figur 3b eine authentifizierte Person vor den Flügelelementen 11 steht, die die Türanlage 100 passieren kann, während gemäß Figur 3a eine nicht authentifizierte Person 13 vor den Flügelelementen 11 steht, und diese geschlossen bleiben, obwohl die Sensoreinheit 12 die Person 13 erfasst. In Figur 3c hat die authentifizierte Person 13 mit dem elektronischen Tag 17 die Türanlage 100 passiert. Der elektronische Tag 17 gemäß dieser Ausführungsform kann auch durch das Kommunikationsmittel 19 selbst gebildet werden.

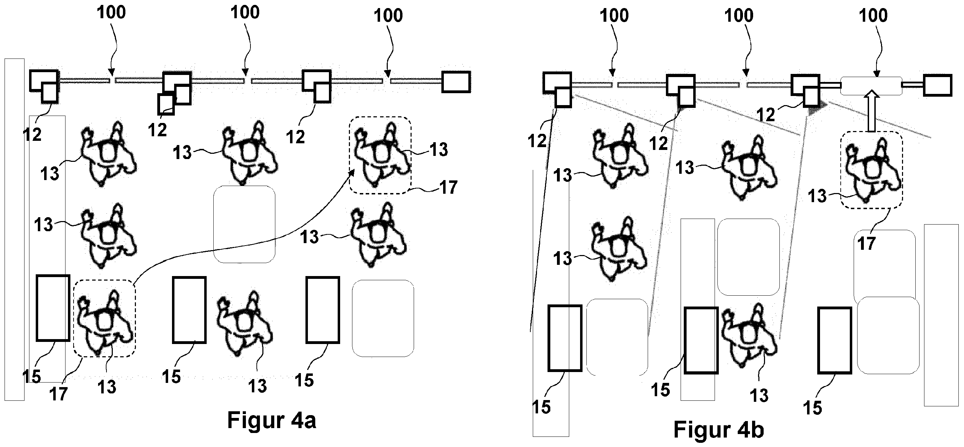

Die Figuren 4a und 4b zeigen eine weitere Ausführungsform der Erfindung mit mehreren Türanlagen 100, die gleichzeitig von mehreren Personen 13 begangen werden. Jede der Türanlage 100 weist eine eigene Authentifizierungseinrichtung 15 auf, wobei im Übergang von der Figur 4a die Person 13, die sich an der Authentifizierungseinrichtung 15 authentifiziert hat und insofern einen elektronischen Tag 17 besitzt, den Bereich vor der linken Türanlage 100 wechselt und sich in den Bereich vor der rechten Türanlage 100 begibt. Die Türanlagen 100 weisen jeweils Sensoreinheiten 12 auf, die einen gemeinsamen Sensorerfassungsbereich 14 bilden, der sich vor allen Türanlagen 100 durchgehend erstreckt und allgemein mit 14 bezeichnet ist. Die Steuerung der Türanlage 100 folgt auf der Weise, dass bei einer einmaligen Authentifizierung der Person 13 an einer der vorhandenen Authentifizierungseinrichtungen 15 diese jede der Türanlagen 100 passieren kann, indem die Türanlagen 100 zentral über eine gemeinsame Regeleinheit gesteuert werden und die authentifizierte Person 13 mit dem angehefteten elektronischen Tag 17 kontinuierlich in der Bewegung und dem Ortswechsel innerhalb des Sensorerfassungsbereiches 14 verfolgt wird.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: Türanlage
- 10: Türantrieb
- 11: Flügelelement
- 12: Sensoreinheit
- 13: Person
- 14: Sensorerfassungsbereich
- 15: Authentifizierungseinrichtung
- 16: Regeleinheit
- 17: elektronischer Tag
- 18: Bildauswerteeinheit
- 19: Kommunikationsmittel
- 20: Erkennungseinrichtung
- 21: Bildkamera
- I: Eingangsseite
- II: Ausgangsseite

## Patentansprüche

1. Verfahren zur Steuerung wenigstens einer Türanlage (100) zur Trennung einer Eingangsseite (I) vor der Türanlage (100) von einer Ausgangsseite (II) hinter der Türanlage (100), wobei die Türanlage (100) wenigstens einen Türantrieb (10) zur Bewegung zumindest eines Flügelelementes (11) zwischen einer Öffnungsstellung und einer Schließstellung aufweist, und wobei die Türanlage (100) mit einer Sensoreinheit (12) zur Erfassung wenigstens einer Person (13) innerhalb eines Sensorerfassungsbereiches (14) und einer Regeleinheit (16) eingerichtet ist, und ferner ist wenigstens auf der Eingangsseite (I) vor der Türanlage (100) eine Authentifizierungseinrichtung (15) zur Authentifizierung von Personen (13) vorgesehen; wobei das Verfahren wenigstens die folgenden Schritte umfasst:
- Erteilen einer Zugangsberechtigung an die Person (13) mittels der Authentifizierungseinrichtung (15),
- Erfassen der Position der authentifizierten Person (13) mittels der Sensoreinheit (12) im Sensorerfassungsbereich (14),
- kontinuierliches Verfolgen der Person (13) im Sensorerfassungsbereich (14) mittels der Sensoreinheit (12) und
- Aktivieren einer Öffnung des Flügelelementes (11) der Türanlage (100) mittels des Türantriebs (10) bei einer Annäherung der authentifizierten Person (13) an das wenigstens eine Flügelelement (11)
- mit der Regeleinheit (16) wird die authentifizierte Person (13) von der nicht authentifizierten Person (13) differenziert, indem die authentifizierte Person (13) nach der Authentifizierung mit einem elektronischen Tag (17) versehen wird, der der Person (13) elektronisch angeheftet wird, wobei
- in Verbindung mit der wenigstens einen Sensoreinheit (12) wenigstens eine Bildauswerteeinheit (18) eingerichtet wird, wobei mittels der Bildauswerteeinheit (18) die kontinuierliche Verfolgung der Bewegung der Person (13) über deren gesamte Erfassungsdauer und/oder den gesamten Erfassungsbereich wenigstens unterstützend ausgeführt und der Regeleinheit (16) bereitgestellt wird.

2. Verfahren zur Steuerung einer Türanlage (100) nach Anspruch 1,
**dadurch gekennzeichnet,**
die Regeleinheit (16) eingerichtet ist, welche die Position des Flügelelementes (11) basierend auf den Sensordaten der Sensoreinheit (12) in Abhängigkeit der Bewegung und/oder der Kontur der Person (13) kontinuierlich und dynamisch fortlaufend wenigstens mittelbar über die Türantriebe (10) regelt.

3. Verfahren zur Steuerung einer Türanlage (100) nach einem der vorgenannten Ansprüche, **dadurch gekennzeichnet, dass** mittels der Bildauswerteeinheit spezifische Attribute der Person (13), insbesondere die Größe oder sonstige Kontur, erkannt werden, bevorzugt, dass die kontinuierliche Verfolgung der Bewegung der Person (13), basierend auf den Attributen, insbesondere der Größe, der Farbe, den Farben oder der Kontur erfolgen kann, besonders bevorzugt, wobei die Person (13) auch noch mit weiteren Merkmalen identifiziert wird.

4. Verfahren zur Steuerung einer Türanlage (100) nach einem der vorgenannten Ansprüche, **dadurch gekennzeichnet, dass** die Daten der Sensoreinheit (12) von künstlicher Intelligenz, insbesondere einem künstliche Intelligenz-System, insbesondere als Teil der Regeleinehit, analysiert werden, bevorzugt, wobei das künstliche Intelligenz-System ein Machine-Learning-System, ein Deep-Learning-System, ein neuronales Netz, eine Konturenerkennung und/oder eine Musterkennung aufweist und/oder durchführt, besonders bevorzugt, wobei die Konturenerkennung und/oder Musterkennung zur erneuten Authentifizierung und/oder zur kontinuierlichen Verfolgung der Bewegung der Person (13) genutzt werden.

5. Verfahren zur Steuerung einer Türanlage (100) nach einem der vorgenannten Ansprüche,
**dadurch gekennzeichnet,**
**dass** die Person (13) ein elektronisches Kommunikationsmittel (19) mitführt und wobei die Türanlage (100) und/oder die Sensoreinheit (12) eine Erkennungseinrichtung (20) als Authentifizierungseinrichtung (15) aufweist, wobei dann, wenn die Person (13) in den Sensorerfassungsbereich (14) eintritt, das elektronische Kommunikationsmittel (19) in räumlicher Verbindung mit der tragenden Person (13) von der Erkennungseinrichtung (20) erfasst wird und wobei der tragenden Person (13) der elektronische Tag (17) angeheftet wird.

6. Verfahren zur Steuerung einer Türanlage (100) nach einem der vorgenannten Ansprüche,
**dadurch gekennzeichnet,**
**dass** dann, wenn die authentifizierte Person (13) das Passieren der Türanlage (100) beabsichtigt und sich dem wenigstens einen Flügelelement (11) nähert, die Regeleinheit (16) das wenigstens eine Flügelelement (11) wenigstens mittelbar über den Türantrieb (10) nur so weit und/oder so lange öffnet, dass auch nur die authentifizierte Person (13) die Türanlage (100) passieren kann.

7. Verfahren zur Steuerung einer Türanlage (100) nach einem der vorgenannten Ansprüche,
**dadurch gekennzeichnet,**
**dass** auf der Eingangsseite und auf der Ausgangsseite der Türanlage (100) jeweils eine Sensoreinheit (12) eingerichtet wird und/oder wobei die Sensorerfassungsbereiche (14) beider Sensoreinheiten (12) sich überschneiden, aneinander angrenzen oder zumindest einen Abstand zueinander aufweisen, der kleiner ist als die Abmessung einer insbesondere kleinen Person, sodass die Erfassung des zumindest einen Objekts (15) von einem ersten Sensorerfassungsbereich (14) an den einen zweiten Sensorerfassungsbereich (14) übergehend und insbesondere unterbrechungsfrei, ausgeführt wird.

8. Verfahren zur Steuerung einer Türanlage (100) nach einem der vorgenannten Ansprüche,
**dadurch gekennzeichnet,**
**dass** die Türanlage (100) zwei Flügelelemente (11) aufweist, wobei die Bewegungen der Flügelelemente (11) mittels der Regeleinheit (16) unabhängig voneinander kontinuierlich und dynamisch fortlaufend wenigstens mittelbar über die Türantriebe (10) geregelt werden.

9. Verfahren zur Steuerung einer Türanlage (100) nach einem der vorgenannten Ansprüche,
**dadurch gekennzeichnet,**
**dass** mit der wenigstens einen Sensoreinheit (12) und mit dem zugehörigen Sensorerfassungsbereich (14) eine Schließkantenabsicherung des wenigstens einen Flügelelementes (11) mittels einer Auswertung von Sensordaten der Sensoreinheit (12) über die Regeleinheit (16) ausgeführt wird.

10. Verfahren zur Steuerung einer Türanlage (100) nach einem der vorgenannten Ansprüche,
**dadurch gekennzeichnet,**
**dass** die Türanlage (100) und/oder die Sensoreinheit (12) wenigstens eine Bildkamera (21) aufweist, mit der das Gesicht der Person (13), insbesondere in Wechselwirkung mit der Regeleinheit (16), erkannt wird, wobei die Erkennung der Person (13) zur Bestimmung einer Begehungsberechtigung der Türanlage (100) mitberücksichtigt wird.

11. Verfahren zur Steuerung mehrerer Türanlagen (100) nach einem der vorgenannten Ansprüche,
**dadurch gekennzeichnet,**
**dass** mehrere Türanlagen (100) mittels einer gemeinsamen Regeleinheit (16) gesteuert werden oder dass mehrere Türanlagen (100) jeweilige Regeleinheiten (16) aufweisen, zwischen denen Daten ausgetauscht werden, wobei bei einer Authentifizierung einer Person (13) mittels der zumindest einen Authentifizierungseinrichtung (15) und/oder der Erkennungseinrichtung (20) einer ersten Türanlage (100) die Person (13) auch eine parallel begehbar eingerichtete weitere Türanlage (100) passieren kann.

12. Türanlage (100) mit einer Regeleinheit (16) zur Ausführung eines Verfahrens nach einem der Ansprüche 1 bis 11.

13. Türanlage (100) nach Anspruch 12,
**dadurch gekennzeichnet,**
**dass** die Regeleinheit (16) in Verbindung mit wenigstens einer Sensoreinheit (12) dazu ausgebildet ist, eine authentifizierte Person (13) von einer nicht authentifizierten Person (13) zu unterscheiden, indem die Regeleinheit (16) und/oder die Sensoreinheit (12) eine einmal authentifizierte Person (13) innerhalb des Sensorerfassungsbereiches (14) verfolgt.

14. Türanlage (100) nach Anspruch 12 oder 13,
**dadurch gekennzeichnet,**
**dass** die Türanlage (100) und/oder insbesondere die Regeleinheit (16) ein Tonausgabemittel, Lichtausgabemittel und/oder Sprachausgabemittel aufweist, um der Person (13) ein Signal zu geben oder eine Mitteilung zu machen.

15. Türanlage (100) nach einem der Ansprüche 12 bis 14,
**dadurch gekennzeichnet,**
**dass** die Sensoreinheit (12) wenigstens eine, bevorzugt zwei Kameras aufweist und/oder dass die Sensoreinheit (12) wenigstens eine Lichtquelle aufweist, mit der ein Lichtraster in den Sensorerfassungsbereich (14) projizierbar ist und/oder wobei die Sensoreinheit (12) eine Bildkamera (21) zur Gesichtserkennung der Person (13) aufweist, insbesondere in Verbindung mit der Regeleinheit (16).
